# EUROPEAN PATENT APPLICATION

(11) **EP 4 478 829 A1**
(43) Date of publication of application: **18.12.2024**
(21) Application number: 22925425.5
(22) Date of filing: 13.02.2022
(51) Int. Cl.: H04W 76/27, H04W 76/19, H04W 24/08

(54) **MEASUREMENT RELAXATION METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2022/076127
(87) International publication number: WO 2023/151063

(57) **Abstract**

A measurement relaxation method and apparatus, a device, and a storage medium, relating to the field of wireless communications. The method is applied to a terminal device, and comprises: in a radio resource control (RRC) connected state, setting a reference value as a current measurement value, the reference value being used for low mobility evaluation and/or staticity evaluation, and the current measurement value comprising measured signal strength of a reference signal (210). The method and apparatus, the device, and the storage medium can set a reference value for low mobility evaluation for a terminal device in an RRC connected state.

## Description

### TECHNICAL FIELD

The disclosure relates to the field of wireless communication, and in particular, to a relaxed measurement method and apparatus, a device, and a storage medium.

### BACKGROUND

In New Radio (NR) wireless communication networks used for 5th Generation (5G) mobile communication technology, terminal devices should measure reference signals from one or more cells in a conventional manner for Bidirectional Forwarding Detection (BFD) or Radio Link Monitoring (RLM). If the terminal device is in a low mobility state, there is no need to maintain measurements in a conventional manner, in order to save the power consumed by these measurements. Thus, low mobility evaluation is introduced, and for terminal devices that meet low mobility requirements, a relaxation mechanism (relaxed measurement) of BFD/RLM will be implemented, such as extending the measurement cycle of terminal devices.

Low mobility evaluation refers to the situation that, within a certain period of time (T_{SearchDeltaP}), if the difference between the reference signal received power and the criterion value is less than a predetermined threshold value (S_{SearchDeltaP}), it means that the signal change amplitude is not large, and the terminal device is currently considered to be in a stationary or low mobility state.

Setting the criterion value for low mobility evaluation for terminal devices in RRC (Radio Resource Control) connected state is an urgent problem to be solved.

### SUMMARY

Embodiments of the present disclosure provide a relaxed measurement method, apparatus, device and storage medium, which can set a criterion value for low mobility evaluation for a terminal device in an RRC connected state. The technical solution is as follows.

According to an aspect of the present disclosure, a relaxed measurement method is provided. The method is performed by a terminal device, and includes:
in case of being in a radio resource control (RRC) connected state, setting a criterion value as a current measurement value, wherein the criterion value is used for low mobility evaluation and/or stationary evaluation, and the current measurement value includes a measured signal strength of a reference signal.

According to an aspect of the present disclosure, a relaxed measurement method is provided. The method is performed by a source access network device, and includes:
in case that a terminal device is in a radio resource control (RRC) connected state, sending an RRC dedicated signaling message to the terminal device, wherein the RRC dedicated signaling message is used to trigger the terminal device to set a criterion value as a current measurement value, the criterion value is used for low mobility evaluation and/or stationary evaluation, and the current measurement value includes a measured signal strength of a reference signal.

According to an aspect of the present disclosure, a relaxed measurement apparatus is provided. The apparatus includes:
a setting module, configured to set a criterion value as a current measurement value in case of being in a radio resource control (RRC) connected state, wherein the criterion value is used for low mobility evaluation and/or stationary evaluation, and the current measurement value includes a measured signal strength of a reference signal.

According to an aspect of the present disclosure, a relaxed measurement apparatus is provided. The apparatus includes:
a second sending module, configured to send a radio resource control (RRC) dedicated signaling message to a terminal device in case that the terminal device is in an RRC connected state, wherein the RRC dedicated signaling message is used to trigger the terminal device to set a criterion value as a current measurement value, the criterion value is used for low mobility evaluation and/or stationary evaluation, and the current measurement value includes a measured signal strength of a reference signal.

According to an aspect of the present disclosure, a terminal device is provided. The terminal device includes a processor, wherein
the processor is configured to set a criterion value as a current measurement value in case of being in a radio resource control (RRC) connected state, wherein the criterion value is used for low mobility evaluation and/or stationary evaluation, and the current measurement value includes a measured signal strength of a reference signal.

According to an aspect of the present disclosure, a network device is provided. The network device includes a transceiver, wherein
the transceiver is configured to send a radio resource control (RRC) dedicated signaling message to a terminal device in case that the terminal device is in an RRC connected state, wherein the RRC dedicated signaling message is used to trigger the terminal device to set a criterion value as a current measurement value, the criterion value is used for low mobility evaluation and/or stationary evaluation, and the current measurement value includes a measured signal strength of a reference signal.

According to an aspect of the present disclosure, a computer readable storage medium is provided. The readable storage medium stores executable instructions, and the executable instructions are loaded and executed by a processor to implement the relaxed measurement method described in the above aspects.

According to an aspect of the present disclosure, a chip is provided. The chip includes a programmable logic circuit and/or program instructions, and is configured to implement the relaxed measurement method described in the above aspects when running on a computer device.

According to an aspect of the present disclosure, a computer program product is provided, which when runs on a processor of a computer device, enables the computer device to implement the relaxed measurement method described in the above aspects.

The technical solution provided in embodiments of the present disclosure includes at least following beneficial effects.

For the terminal device in RRC connected state, the currently measured signal strength of the reference signal is set as the criterion value, so that the terminal device can use this criterion value for low mobility evaluation. A method for setting a criterion value for low mobility evaluation is provided when the terminal device is in RRC connected state.

### BRIEF DESCRIPTION OF THE DRAWINGS

In order to provide a clearer explanation of the technical solution in embodiments of the present disclosure, a brief introduction will be given below to the accompanying drawings required in the description of the embodiments. It is obvious that the accompanying drawings are only some of the disclosed embodiments. For those skilled in the art, other accompanying drawings can be obtained based on these drawings without creative labor.
Fig. 1 is a schematic diagram of a system architecture provided in an exemplary embodiment of the present disclosure.
Fig. 2 is a schematic diagram of an EN-DC network architecture.
Fig. 3 is a schematic diagram of MCG and SCG structures.
Fig. 4 is a schematic flowchart of a relaxed measurement method provided in an exemplary embodiment of the present disclosure.
Fig. 5 is a schematic flowchart of a relaxed measurement method provided in an exemplary embodiment of the present disclosure.
Fig. 6 is a schematic flowchart of a relaxed measurement method provided in an exemplary embodiment of the present disclosure.
Fig. 7 is a schematic flowchart of a relaxed measurement method provided in an exemplary embodiment of the present disclosure.
Fig. 8 is a schematic flowchart of a relaxed measurement method provided in an exemplary embodiment of the present disclosure.
Fig. 9 is a block diagram of a relaxed measurement apparatus provided in an exemplary embodiment of the present disclosure.
Fig. 10 is a block diagram of a relaxed measurement apparatus provided in an exemplary embodiment of the present disclosure.
Fig. 11 is a schematic block diagram of a communication device provided in an exemplary embodiment of the present disclosure.

### DETAILED DESCRIPTION

In order to clarify the purpose, technical solution, and advantages of the present disclosure, a further detailed description of the embodiments of the present disclosure will be provided below in conjunction with the accompanying drawings. Here, exemplary embodiments will be described in detail, with examples shown in the accompanying drawings. When referring to the accompanying drawings, unless otherwise indicated, the same numbers in different drawings represent the same or similar elements. The implementations described in the following exemplary embodiments do not represent all implementations consistent with the present disclosure. On the contrary, they are only examples of apparatuses and methods consistent with some aspects of the present disclosure as described in the accompanying claims. The network architecture and business scenarios described in the embodiments of this disclosure are intended to provide a clearer explanation of the technical solution of the embodiments of this disclosure, and do not constitute a limitation on the technical solution provided by the embodiments of this disclosure. Those skilled in the art will understand that with the evolution of network architecture and the emergence of new business scenarios, the technical solution provided by the embodiments of this disclosure is also applicable to similar technical problems. The terms used in this disclosure are for the purpose of describing specific embodiments only and are not intended to limit this disclosure. The singular forms of "one", "said", and "this" used in this disclosure and the appended claims are also intended to include the majority form, unless the context clearly indicates otherwise. It should also be understood that the term "and/or" used in this article refers to and includes any or all possible combinations of one or more associated listed items.

It should be understood that although the terms first, second, etc. may be used in this disclosure to describe various information, these terms should not be limited to them. These terms are only used to distinguish information of the same type from each other. For example, without departing from the scope of this disclosure, the first parameter may also be referred to as the second parameter, and similarly, the second parameter may also be referred to as the first parameter. Depending on the context, the word 'if used here can be interpreted as 'when' or 'upon' or 'in response to determining ........

It should be noted that the information (including but not limited to user device information, user personal information, etc.), data (including but not limited to data used for analysis, stored data, displayed data, etc.), and signals involved in this disclosure are all authorized by the user or fully authorized by all parties, and the collection, use, and processing of relevant data must comply with relevant laws, regulations, and standards of relevant countries and regions.

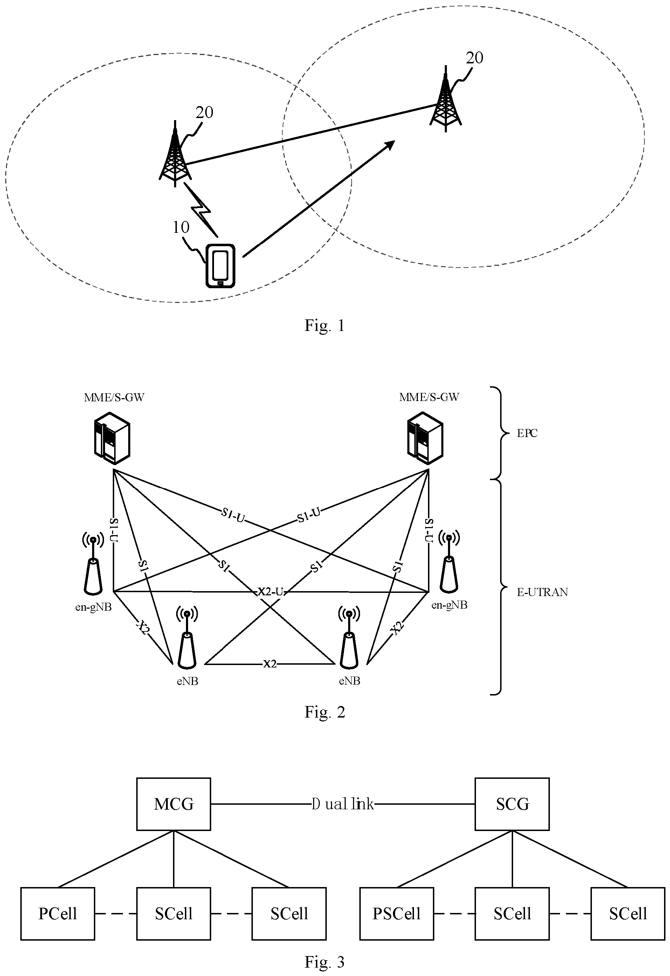

Please refer to Fig. 1, which illustrates a schematic diagram of a system architecture provided in an embodiment of the present disclosure. The system architecture may include terminal devices 10 and network devices 20.

The number of terminal devices 10 is usually multiple, and each network device 20 can manage one or more terminal devices 10 distributed within the cell. The terminal devices 10 may include various handheld devices with wireless communication capabilities, in-vehicle devices, wearable devices, computing devices, or other processing devices connected to wireless modems, as well as various forms of user equipment (UE), mobile stations (MS), and so on. For the convenience of description, in the embodiments of this disclosure, the devices mentioned above are collectively referred to as terminal devices.

A connection can be established between the network device 20 and the terminal device 10 via an air interface, allowing for communication, including signaling and data exchange, through this connection.

The network device 20 is a device deployed in an access network to provide wireless communication functionality for terminal devices 10. The network devices 20 may include various forms of macro base stations, micro base stations, relay stations, access points, and so on. In systems using different wireless access technologies, the names of devices with network equipment functions may vary, such as gNodeB or gNB in 5G NR systems. With the evolution of communication technology, the name 'base station' may change. For the convenience of description, in the embodiments of the present disclosure, the devices that provide wireless communication function for terminal devices 10 are collectively referred to as network devices. There may be multiple network devices 10, and communication between two adjacent network devices 10 can also be conducted through wired or wireless means. The terminal device 10 can switch between different network devices 10, that is, establish connections with different network devices 10.

The "5G NR system" in embodiments of the present disclosure can also be referred to as a 5G system or NR system, but those skilled in the art can understand its meaning. The technical solution described in embodiments of the present disclosure can be applied to 5G NR systems, as well as to subsequent evolution systems of 5G NR systems.

Taking the fifth generation mobile communication technology as an example, in the early deployment of NR, it was difficult to obtain complete NR coverage. Typical network coverage includes wide area Long Term Evolution (LTE) coverage and NR islanding coverage mode. A large number of LTE deployments are below 6GHz, and there is very little spectrum below 6GHz available for 5G. In order to protect the early investment of mobile operators in LTE, a tight interlocking mode between LTE and NR has been proposed. Taking LTE-NR Dual Connectivity (EN-DC) as an example, Fig. 2 shows a schematic diagram of the EN-DC network architecture. LTE serves as the MN (Master Node), while NR serves as the SN (Secondary Node). MN is mainly used to implement RRC control functions and control planes to CN (Core Network), while SN is used to configure auxiliary signaling, such as the third wireless signaling bearer (Signaling Radio Bearer 3, SRB3), which mainly provides data transmission functions.

The primary cell of MN is called the primary cell (PCell), the secondary cell of MN is called the secondary cell (SCell), and all cells related to MN belong to the master cell group (MCG). The primary cell of SN is called the primary secondary cell (PSCell), the secondary cell of SN is called the secondary cell (SCell), and all cells related to SN belong to the secondary cell group (SCG). Fig. 3 shows a schematic diagram of the MCG and SCG structures.

In R17 (Release 17), a relaxation mechanism for BFD (Bidirectional Forwarding Detection)/RLM (Radio Link Monitoring) was introduced. For terminal devices that meet the relaxation criteria (low mobility), BFD/RLM relaxation mechanism will be implemented. Similarly, for RLF (Radio Link Failure) and RRM (Radio Resource Management), RLF relaxed measurement or RRM relaxed measurement will also be carried out for low mobility or prohibited users.

The low mobility relaxation criteria can be issued through protocol agreements, where the evaluation parameters involved in the low mobility relaxation criteria are issued by measuring trigger events. The evaluation parameters for low mobility evaluation include T_{SearchDeltaP} and S_{SearchDeltaP}. The evaluation parameters for stationary evaluation include T_{SearchDeltaP}' and S_{SearchDeltaP}'. S_{SearchDeltaP} and S_{SearchDeltaP}' can be the same or different. The determining metric for low mobility evaluation and stationary evaluation is L3 (Layer 3) - RSRP (Reference signal received power) of the reference signal.

In R16, RRM relaxed measurement is introduced for terminal devices in non-connected state, with one rule being the low mobility rule.

Low Mobility Evaluation: Within a certain period of time (T_{SearchDeltaP}), if the difference between the received quality of the reference signal and the current RSRP of the UE is less than a predetermined threshold value (S_{SearchDeltaP}), it indicates that the signal change amplitude is not significant, and it can be considered that the UE is currently in a stationary or low mobility state. It is worth noting that this decision only needs to be considered when the received quality of the reference signal decreases, and the specific decision condition is: (S_{rxlevRef}-Sᵣₓₗₑᵥ)<S_{SearchDeltaP}. Sᵣₓₗₑᵥ= Sᵣₓₗₑᵥ of the current serving cell, in dB; S_{rxlevRef}=reference value (criterion value) of Sᵣₓₗₑᵥ for the current serving cell, in dB.

In the related art, the criterion value is set according to the following method:
(1) UE selects or reselects a new cell;
(2) (Sᵣₓₗₑᵥ - S_{rxlevRef}> 0);
(3) The above decision condition is not met within TSearchDeltaP;

When any of the above conditions is met, UE sets S_{rxlevRef} to Sᵣₓₗₑᵥ of the current serving cell.

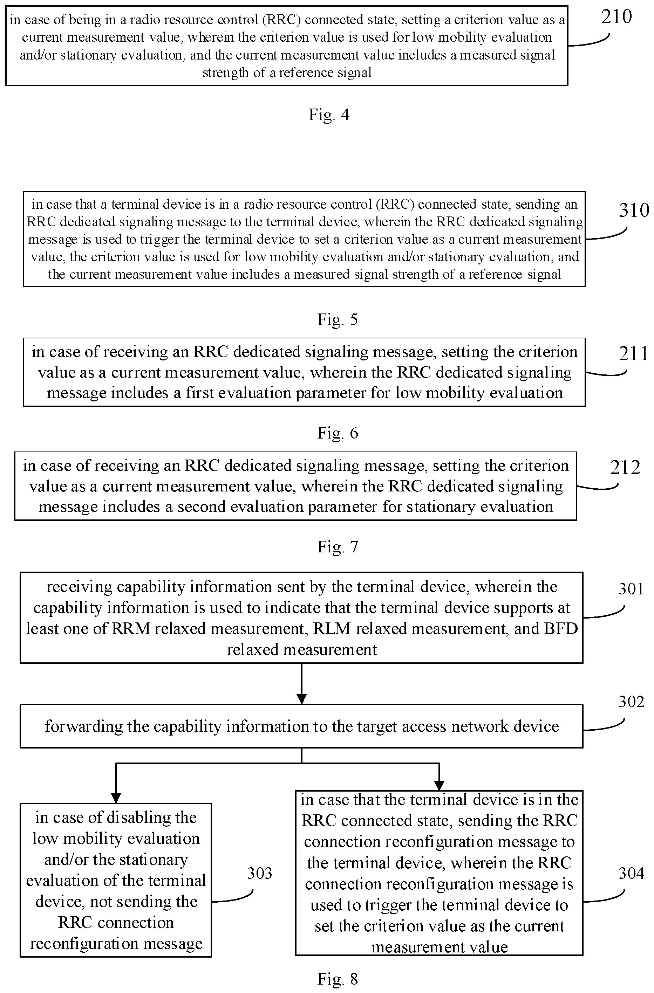

Please refer to Fig. 4, which is a flowchart of a relaxed measurement method provided in an embodiment of the present disclosure. The method may be applied to terminal devices of the system architecture shown in Fig. 1. The method includes the following step.

In step 210, in case of being in an RRC connected state, a criterion value is set as a current measurement value, wherein the criterion value is used for low mobility evaluation and/or stationary evaluation, and the current measurement value include a measured signal strength of a reference signal.

When the terminal device is in the RRC connected state, the terminal device sets the currently measured signal strength of the reference signal as the criterion value for low mobility evaluation or stationary evaluation. Of course, there may be other conditions for setting the evaluation criterion value. Similar to non-connected state, if the current measurement value is greater than the criterion value, or if the above judgment conditions are not met within the specified duration, it can also cause the terminal device to set the currently measured signal strength of the reference signal (i.e. the current measurement value) as the criterion value for low mobility evaluation or stationary evaluation.

In the RRC connected state, the first criterion value is set as the current measurement value. The first criterion value is used for low mobility evaluation. In the RRC connected state, the second criterion value is set as the current measurement value. The second criterion value is used for stationary evaluation. For example, the first criterion value and the second criterion value are the same. Alternatively, the first criterion value and the second criterion value may be different.

The current measurement value refers to the signal strength of the reference signal obtained by the terminal device in the latest measurement.

The signal strength includes at least one of Lay3-RSRP, Lay3-RSRQ (Reference Signal Received Quality), and reference signal SINR (Signal to Interference plus Noise Ratio). Here, for RSRP, its unit is dBm; for RSRQ and RS-SINR, their units are dB (expressed in dBm in case of RSRP, or in dB in case of RSRQ and RS-SINR).

The criterion value is used for low mobility evaluation or stationary evaluation. The terminal device calculates the difference between the measured signal strength of the reference signal and the criterion value, compares the difference with the preset threshold value, and determines whether the terminal device is in a low mobility state or a stationary state.

In summary, the method provided in this embodiment sets the currently measured signal strength of the reference signal as the criterion value for the terminal device in RRC connected state, so that the terminal device can use this criterion value for low mobility evaluation/stationary evaluation. A method for setting the criterion value for low mobility evaluation/stationary evaluation when the terminal device is in the RRC connected state is provided.

Please refer to Fig. 5, which is a flowchart of a relaxed measurement method provided in an embodiment of the present disclosure. The method can be applied in a source access network device. For example, the source access network device may be the network device of the system architecture shown in Fig. 1. The method includes the following step.

In step 310, in case that the terminal device is in an RRC connected state, an RRC dedicated signaling message is sent to the terminal, wherein the RRC dedicated signaling message is used for trigger the terminal device to set a criterion value as a current measurement value, the criterion value is used for low mobility evaluation and/or stationary evaluation, and the current measurement value comprises a measured signal strength of a reference signal.

The source access network device is an access network device that the terminal device is currently accessing.

When the terminal device is in the RRC connected state, the source access network device triggers the terminal device to set the criterion value as the current measurement value by sending the RRC dedicated signaling message to the terminal device. That is, the current measurement value is used as the criterion value.

In summary, the method provided in this embodiment sets the currently measured signal strength of the reference signal as the criterion value for the terminal device in the RRC connected state, so that the terminal device can use this criterion value for low mobility evaluation/stationary evaluation. There is provided a method for setting the criterion value for low mobility evaluation/stationary evaluation when the terminal device is in the RRC connected state.

For example, an exemplary embodiment of setting the criterion value for low mobility evaluation is given.

Please refer to Fig. 6, which shows a flowchart of a relaxed measurement method provided by an embodiment of the present disclosure. The method can be applied to the terminal device of the system architecture shown in Fig. 1. The method includes the following step.

In step 211, the criterion value is set as the current measurement value in case of receiving the RRC dedicated signaling message, wherein the criterion value is used for low mobility evaluation, and the RRC dedicated signaling message includes a first evaluation parameter for the low mobility evaluation.

For example, the source access network device sends the RRC dedicated signaling message to the terminal device. The terminal device sets the criterion value as the current measurement value upon receiving the RRC dedicated signaling message.

The RRC dedicated signaling message includes at least one of the first evaluation parameter for low mobility evaluation, a second evaluation parameter for stationary evaluation, and other configurations.

The first evaluation parameter includes at least one of a first preset threshold S_{SearchDeltaP} and a first duration T_{SearchDeltaP} for the low mobility evaluation. Within the first duration, if the first difference is less than the first preset threshold, it is determined that the terminal device is in the low mobility state, wherein the first difference is the difference between the measured signal strength of the reference signal and the criterion value (first criterion value).

That is, the RRC dedicated signaling message further includes other configurations (other config), which are used to notify the terminal device to perform UAI (UE Assistance Information) reporting for the low mobility evaluation.

In the case where the RRC dedicated signaling message includes other configurations, the terminal device sends the UAI for the low mobility evaluation to the source access network device. The source access network device receives the UAI for the low mobility evaluation sent by the terminal device.

For example, the RRC dedicated signaling message may be RRC connection reconfiguration message or RRC connection recovery message.

### 1. The RRC dedicated signaling message is the RRC connection reconfiguration message.

(1) The RRC connection reconfiguration message indicates that the low mobility evaluation is used for at least one of RRM relaxed measurement evaluation, RLM relaxed measurement evaluation, and BFD relaxed measurement evaluation.
   The RLM is also called RLF.
(2) For example, the RRC connection reconfiguration message includes a switching indication. The switching indication is used to indicate the terminal device to switch from the source access network device to a target access network device. Alternatively, the RRC connection reconfiguration message does not include the switching indication.

That is, for scenarios where the terminal device switches between access network devices or does not switches between access network devices, the terminal device can set the criterion value to the current measurement value when receiving the RRC connection reconfiguration message.

For example, the RRC connection reconfiguration message may also carry reconfiguration with sync. The reconfiguration with sync is used to indicate the terminal device to initiate random access when switching access network devices/changing secondary nodes/adding secondary nodes/modifying secondary nodes, that is, indicate the terminal device to configure the low mobility evaluation when switching access network devices/changing secondary nodes/adding secondary nodes/modifying secondary nodes.

For example, the RRC connection reconfiguration message may not carry reconfiguration with sync. That is, the low mobility evaluation is only configured for the terminal in this cell.

(3) For example, the RRC connection reconfiguration message includes a secondary node add/change/modification indication, where the secondary node add indication is used to indicate the terminal device to add a secondary node; or, the RRC connection reconfiguration message includes a secondary node change indication, which is used to indicate the terminal device to change a secondary node; or, the RRC connection reconfiguration message may include a secondary node modification indication, which is used to indicate the terminal device to modify the secondary node.

That is, the RRC connection reconfiguration message is used to notify the terminal device to add/change/modify SN (Secondary Node).

(4) The terminal device can also send capability information to the source access network device. The capability information is used to indicate that the terminal device supports at least one of RRM relaxed measurement, RLM relaxed measurement, and BFD relaxed measurement.

The source access network device can forward the capability information of the terminal device to other access network devices (such as forwarding capability information to the target access network device). The target access network device is the access network device that the terminal device is going to switch to.
a. The base station can transfer the capability information of the terminal device to other base stations in the switching request. That is, the source access network device sends a switching request to the target access network device, which includes the capability information. The switching request is used to request the terminal device to switch from the source access network device to the target access network device.
b. The base station can transfer the capability information of the terminal device to other base stations in the SN add/modification request. That is, the source access network device sends the secondary node add or modification request to the target access network device. The secondary node add request includes the capability information. The secondary node add request is used to request the addition of a secondary node for the terminal device, and the secondary node modification request is used to request the modification of the secondary node for the terminal device.

Alternatively, the source access network device sends the secondary node change request to the target access network device. The secondary node change request includes the capability information of the terminal device, and the secondary node change request is configured to request the change of secondary node for the terminal device.

The switching request further includes a relaxed measurement parameter, or the secondary node add request further includes a relaxed measurement parameter, or the secondary node modification request further includes a relaxed measurement parameter, or the secondary node change request further includes a relaxed measurement parameter. The relaxed measurement parameter is used for configuration reference of the target access network device/target cell.

The relaxed measurement parameter is configured by the source access network device for the terminal device. The relaxed measurement parameter includes a parameter for at least one of RRM relaxed measurement, RLM relaxed measurement, and BFD relaxed measurement.

The relaxed measurement parameter includes at least one of a first evaluation parameter for low mobility evaluation, and a first enable or disable indication, wherein the first enable or disable indication is used to indicate enabling/disabling the low mobility evaluation.

That is, the relaxed measurement parameter may include the relaxed measurement parameter corresponding to at least one relaxed measurement. For example, the relaxed measurement parameters corresponding to different relaxed measurements may be the same or different. For example, the first evaluation parameter for RRM relaxed measurement and the first evaluation parameter for RLM relaxed measurement may be the same or different.

For example, the base station carries the relaxed measurement parameter of RRM/RLM/BFD relaxed measurement in the RRC connection reconfiguration message. If the terminal device receives the RRC connection reconfiguration message, it will set the criterion value as the current measurement value for low mobility evaluation when switching to the target base station/target cell, or when accessing a new Pscell. At this point, the handover or access to the new Pscell is successful. For the terminal, it can determine whether the random access process of media access control (MAC) is completed. Pcell switch is the target cell switch/ the target access network device switch; the Pscell switch is SN change. If the terminal does not receive the RRC connection reconfiguration message, or fails to switch or access to a new Pscell, it is not necessary to start the low mobility evaluation.

As an embodiment, the terminal decides that the handover of the master node is successful, that is, the MAC node of the MCG successfully completes the random access process to the target cell or base station. At this time, the spCellConfig of MCG in the RRC reconfiguration message carries the reconfiguration with sync, and the terminal will initiate the random access process after receiving the reconfiguration with sync indication. After MAC of an MCG successfully completes a random access procedure after applying a reconfigurationWithsync in spCellConfig of an MCG, the terminal sets the criterion value as the current measurement value.

That is, in case that the terminal device receives the RRC connection reconfiguration message and switches from the source access network device to the target access network device, it sets the criterion value as the current measurement value; or, in case that the terminal device receives the RRC connection reconfiguration message and switches to the target primary cell, it sets the criterion value to the current measurement value; or, in case that the terminal device receives the RRC connection reconfiguration message and switches to the first target primary secondary cell, it sets the criterion value to the current measurement value; or, in case that the terminal device receives the RRC connection reconfiguration message and accesses the second target primary secondary cells, it sets the criterion value to the current measurement value.

Alternatively, setting the criterion value as the current measurement value in case of receiving the RRC connection reconfiguration message and accessing the second target primary secondary cell includes: setting the criterion value as the current measurement value in case of receiving the RRC connection reconfiguration message and modifying the second target primary secondary cell.

As an embodiment, the terminal decides that the handover to the first target primary secondary cell is successful, that is, the MAC node of SCG successfully completes the random access process to the target cell or base station. At this time, the spCellConfig of SCG in the RRC reconfiguration message carries the reconfiguration with sync, and the terminal will initiate the random access process after receiving the reconfiguration with sync indication. After MAC of an SCG successfully completes a random access procedure after applying an reconfigurationWithsync in spCellConfig of an SCG, the terminal sets the criterion value as the current measurement value.

In the case where the low mobility evaluation and/or stationary evaluation of the terminal device are disabled, the source access network device does not send the RRC connection reconfiguration message. In the case where the RRC connection reconfiguration message is not received, the terminal device disables the low mobility evaluation.

### 2. The RRC dedicated signaling message is an RRC connection recovery message.

The RRC connection recovery message indicates that the low mobility evaluation is used for at least one of RRM relaxed measurement evaluation, RLM relaxed measurement evaluation, and BFD relaxed measurement evaluation. That is, the RRC connection recovery message is used to notify the terminal device that the low mobility evaluation may be used for at least one of RRM relaxed measurement evaluation, RLM relaxed measurement evaluation, and BFD relaxed measurement evaluation.

In summary, in the method provided in this embodiment, for the terminal device in the RRC connected state, the terminal device can set the currently measured signal strength of the reference signal as the criterion value when receiving the RRC dedicated signaling message, so that the terminal device can use the criterion value for low mobility evaluation. Alternatively, the terminal device can set the currently measured signal strength of the reference signal as the criterion value when receiving the RRC connection reconfiguration message and switching to the target base station/target cell/target secondary node. This disclosure provides a method for setting the criterion value for low mobility evaluation when the terminal device is in the RRC connected state.

For example, an exemplary embodiment of setting the criterion value for stationary evaluation is given.

Please refer to Fig. 7, which shows a flowchart of a relaxed measurement method provided by an embodiment of the present disclosure. The method can be applied to the terminal device of the system architecture shown in Fig. 1. The method includes the following step.

In step 212, the criterion value is set as the current measurement value in case of receiving the RRC dedicated signaling message, wherein the criterion value is used for stationary evaluation, and the RRC dedicated signaling message includes a second evaluation parameter for the stationary evaluation.

The second evaluation parameter includes at least one of a second preset threshold S_{SearchDeltaP}' and a second duration T_{SearchDeltapP}' for the stationary evaluation. The second threshold and the first threshold may be the same or different. The first duration and the second duration may be the same or different. Within the second duration, if the second difference is less than the second preset threshold, it is determined that the terminal device is in the stationary state, wherein the second difference is the difference between the measured signal strength of the reference signal and the criterion value (second criterion value).

In the case of receiving the RRC dedicated signaling message, the terminal device can set the second criterion value as the current measurement value, and the second criterion value is used for stationary evaluation.

The RRC dedicated signaling message includes at least one of the first evaluation parameter for low mobility evaluation, the second evaluation parameter for stationary evaluation, and other configurations.

That is, the RRC dedicated signaling message further includes other configurations (other config), which are used to notify the terminal device to perform UAI (UE Assistance Information) reporting for the stationary evaluation.

In the case where the RRC dedicated signaling message includes other configurations, the terminal device sends the UAI for the stationary evaluation to the source access network device. The source access network device receives the UAI for the stationary evaluation sent by the terminal device.

For example, the RRC dedicated signaling message may be RRC connection reconfiguration message or RRC connection recovery message.

### 1. The RRC dedicated signaling message is the RRC connection reconfiguration message.

(1) The RRC connection reconfiguration message indicates that the stationary evaluation is used for at least one of RRM relaxed measurement evaluation, RLM relaxed measurement evaluation, and BFD relaxed measurement evaluation.
(2) For example, the RRC connection reconfiguration message includes a switching indication. The switching indication is used to indicate the terminal device to switch from the source access network device to a target access network device. Alternatively, the RRC connection reconfiguration message does not include the switching indication.

For example, the RRC connection reconfiguration message may also carry reconfiguration with sync. The reconfiguration with sync is used to indicate the terminal device to initiate random access when switching access network devices/changing secondary nodes/adding secondary nodes/modifying secondary nodes, that is, indicate the terminal device to configure the stationary evaluation when switching access network devices/changing secondary nodes/adding secondary nodes/modifying secondary nodes.

For example, the RRC connection reconfiguration message may not carry reconfiguration with sync. That is, the stationary evaluation is only configured for the terminal in this cell.

(3) For example, the RRC connection reconfiguration message includes a secondary node add/change/modification indication, where the secondary node add indication is used to indicate the terminal device to add a secondary node; or, the RRC connection reconfiguration message includes a secondary node change indication, which is used to indicate the terminal device to change a secondary node; or, the RRC connection reconfiguration message may include a secondary node modification indication, which is used to indicate the terminal device to modify the secondary node.

(4) The terminal device can also send capability information to the source access network device. The capability information is used to indicate that the terminal device supports at least one of RRM relaxed measurement, RLM relaxed measurement, and BFD relaxed measurement.

The source access network device can forward the capability information of the terminal device to other access network devices (such as forwarding capability information to the target access network device). The target access network device is the access network device that the terminal device is going to switch to.
a. The base station can transfer the capability information of the terminal device to other base stations in the switching request. That is, the source access network device sends a switching request to the target access network device, which includes the capability information. The switching request is used to request the terminal device to switch from the source access network device to the target access network device.
b. The base station can transfer the capability information of the terminal device to other base stations in the SN add/modification request. That is, the source access network device sends the secondary node add or modification request to the target access network device. The secondary node add request includes the capability information. The secondary node add request is used to request the addition of a secondary node for the terminal device, and the secondary node modification request is used to request the modification of the secondary node for the terminal device.

Alternatively, the source access network device sends the secondary node change request to the target access network device. The secondary node change request includes the capability information of the terminal device, and the secondary node change request is configured to request the change of secondary node for the terminal device.

The switching request further includes a relaxed measurement parameter, or the secondary node add request further includes a relaxed measurement parameter, or the secondary node modification request further includes a relaxed measurement parameter, or the secondary node change request further includes a relaxed measurement parameter. The relaxed measurement parameter is used for configuration reference of the target access network device/target cell.

The relaxed measurement parameter is configured by the source access network device for the terminal device. The relaxed measurement parameter includes a parameter for at least one of RRM relaxed measurement, RLM relaxed measurement, and BFD relaxed measurement.

The relaxed measurement parameter includes at least one of a first evaluation parameter for low mobility evaluation, a second evaluation parameter for stationary evaluation, a first enable or disable indication, and a second enable/disable indication, wherein the first enable or disable indication is used to indicate enabling/disabling the low mobility evaluation, and the second enable/disable indication is used to indicate enabling or disabling the stationary evaluation.

That is, the relaxed measurement parameter may include the relaxed measurement parameter corresponding to at least one relaxed measurement. For example, the relaxed measurement parameters corresponding to different relaxed measurements may be the same or different. For example, the first evaluation parameter for RRM relaxed measurement and the first evaluation parameter for RLM relaxed measurement may be the same or different.

For example, the base station carries the relaxed measurement parameter of RRM/RLM/BFD relaxed measurement in the RRC connection reconfiguration message. If the terminal device receives the RRC connection reconfiguration message, it will set the criterion value as the current measurement value for low mobility evaluation when switching to the target base station/target cell, or when accessing a new Pscell. At this point, the handover or access to the new Pscell is successful. For the terminal, it can determine whether the random access process of media access control (MAC) is completed. Pcell switch is the target cell switch/ the target access network device switch; the Pscell switch is SN change. If the terminal does not receive the RRC connection reconfiguration message, or fails to switch or access to a new Pscell, it is not necessary to start the low mobility evaluation.

As an embodiment, the terminal decides that the handover of the master node is successful, that is, the MAC node of the MCG successfully completes the random access process to the target cell or base station. At this time, the spCellConfig of MCG in the RRC reconfiguration message carries the reconfiguration with sync, and the terminal will initiate the random access process after receiving the reconfiguration with sync indication. After MAC of an MCG successfully completes a random access procedure after applying a reconfigurationWithsync in spCellConfig of an MCG, the terminal sets the criterion value as the current measurement value.

That is, in case that the terminal device receives the RRC connection reconfiguration message and switches from the source access network device to the target access network device, it sets the criterion value as the current measurement value; or, in case that the terminal device receives the RRC connection reconfiguration message and switches to the target primary cell, it sets the criterion value to the current measurement value; or, in case that the terminal device receives the RRC connection reconfiguration message and switches to the first target primary secondary cell, it sets the criterion value to the current measurement value; or, in case that the terminal device receives the RRC connection reconfiguration message and accesses the second target primary secondary cells, it sets the criterion value to the current measurement value.

Alternatively, setting the criterion value as the current measurement value in case of receiving the RRC connection reconfiguration message and accessing the second target primary secondary cell includes: setting the criterion value as the current measurement value in case of receiving the RRC connection reconfiguration message and modifying the second target primary secondary cell.

As an embodiment, the terminal decides that the handover to the first target primary secondary cell is successful, that is, the MAC node of SCG successfully completes the random access process to the target cell or base station. At this time, the spCellConfig of SCG in the RRC reconfiguration message carries the reconfiguration with sync, and the terminal will initiate the random access process after receiving the reconfiguration with sync indication. After MAC of an SCG successfully completes a random access procedure after applying an reconfigurationWithsync in spCellConfig of an SCG, the terminal sets the criterion value as the current measurement value.

In the case where the stationary evaluation of the terminal device is disabled, the source access network device does not send the RRC connection reconfiguration message. In the case where the RRC connection reconfiguration message is not received, the terminal device disables the stationary evaluation.

### 2. The RRC dedicated signaling message is the RRC connection recovery message.

The RRC connection recovery message indicates that the stationary evaluation is used for at least one of RRM relaxed measurement evaluation, RLM relaxed measurement evaluation, and BFD relaxed measurement evaluation. That is, the RRC connection recovery message is used to notify the terminal device that the stationary evaluation may be used for at least one of RRM relaxed measurement evaluation, RLM relaxed measurement evaluation, and BFD relaxed measurement evaluation.

In summary, in the method provided in this embodiment, for the terminal device in the RRC connected state, the terminal device can set the currently measured signal strength of the reference signal as the criterion value when receiving the RRC dedicated signaling message, so that the terminal device can use the criterion value for stationary evaluation. Alternatively, the terminal device can set the currently measured signal strength of the reference signal as the criterion value when receiving the RRC connection reconfiguration message and switching to the target base station/target cell/target secondary node. This disclosure provides a method for setting the criterion value for stationary evaluation when the terminal device is in the RRC connected state.

For example, an exemplary embodiment in which the source access network device forwards the capability information of the terminal device to other access network devices is given.

Please refer to Fig. 8, which shows a flowchart of a relaxed measurement method provided by an embodiment of the present disclosure. The method can be applied to the source access network device. For example, the source access network device may be the network device of the system architecture shown in Fig. 1. The method includes the following step.

In step 301, the capability information sent by the terminal device is received, wherein the capability information is used to indicate that the terminal device supports at least one of RRM relaxed measurement, RLM relaxed measurement, and BFD relaxed measurement.

For example, RRM relaxed measurement, RLM relaxed measurement and BFD relaxed measurement correspond to one indication information respectively, which indicates whether the terminal device supports this relaxed measurement. The capability information may include at least one of the three indication information. For example, 0 means not supported and 1 means supported. The capability information can include: the first indication information corresponding to RRM relaxed measurement: 1, the second indication information corresponding to RLM relaxed measurement: 0, and the third indication information corresponding to BFD relaxed measurement: 1. Then the capability information indicates that the terminal device supports RRM relaxed measurement and BFD relaxed measurement, and does not support RLM relaxed measurement.

For example, the RRM relaxed measurement, RLM relaxed measurement and BFD relaxed measurement can also correspond to one indication information, that is, one indication information describes whether the terminal devices indicates these three kinds of relaxed measurement. For example, 0 means not supported and 1 means supported. The capability information may include indication information: 101. Then the capability information indicates that the terminal device supports the RRM relaxed measurement and BFD relaxed measurement, and does not support RLM relaxed measurement.

In step 302, the capability information is forwarded to the target access network device.

For example, after receiving the capability information sent by the terminal device, the source access network device can forward the capability information to other access network devices, for example, to the target access network device.

The target access network device may be the access network device that the terminal device is going to switch to. For example, the target access network device is the access network device corresponding to the Pcell that the terminal device is going to switch to.

The target access network device may be the access network device corresponding to the primary secondary cell (secondary node) that the terminal device is going to change/add/modify.

For example, the source access network device sends the switching request to the target access network device, the switching request includes the capability information, and the switching request is used to request the terminal device to switch from the source access network device to the target access network device.

The source access network device sends the secondary node add request to the target access network device, the secondary node add request includes the capability information, and the secondary node add request is used to request adding a secondary node for the terminal device.

The source access network device sends the secondary node modification request to the target access network device, the secondary node modification request includes the capability information, and the secondary node modification request is used to request modifying a secondary node for the terminal device. For example, the secondary node modification request is used to request modification of relevant information (e.g., configuration information) of the secondary node currently accessed by the terminal device.

The source access network device sends the secondary node change request to the target access network device, the secondary node change request includes the capability information, and the secondary node change request is used to request changing a secondary node for the terminal device.

The switching request further includes a relaxed measurement parameter, or the secondary node add request further includes a relaxed measurement parameter, or the secondary node modification request further includes a relaxed measurement parameter, or the secondary node change request further includes a relaxed measurement parameter. The relaxed measurement parameter is used for configuration reference of the target access network device/target cell.

The relaxed measurement parameter is configured by the source access network device for the terminal device. The relaxed measurement parameter includes a parameter for at least one of RRM relaxed measurement, RLM relaxed measurement, and BFD relaxed measurement.

For example, RRM relaxed measurement, RLM relaxed measurement and BFD relaxed measurement can correspond to a set of relaxed measurement parameters respectively, or RRM relaxed measurement, RLM relaxed measurement and BFD relaxed measurement can correspond to the same set of relaxed measurement parameters.

For example, the set of relaxed measurement parameters may include at least one of the first evaluation parameter for low mobility evaluation, the second evaluation parameter for stationary evaluation, the first enable or disable indication, and the second enable or disable indication. The first enable or disable indication is used to indicate enable or disable of the low mobility evaluation. The second enable or disable indication is used to indicate enable or disable of the stationary evaluation.

In step 303, in the case where the low mobility evaluation and/or stationary evaluation of the terminal device is disabled, the RRC connection reconfiguration message is not sent.

For example, in the case where the low mobility evaluation and/or stationary evaluation of the terminal device is disabled, the source access network device does not send the RRC connection reconfiguration message carrying the relaxed measurement parameter.

For example, when the source access network device determines that the terminal does not support RRM/RLM/BFD relaxed measurement, it determines to disable the low mobility evaluation and/or stationary evaluation of the terminal device. Or, when the source access network device determines that the target access network device does not support RRM/RLM/BFD relaxed measurement, it determines to disable the low mobility evaluation and/or stationary evaluation of the terminal device. Or, the source access network device determines to not enable the low mobility evaluation and/or stationary evaluation of the terminal device currently according to other information.

In the case where the terminal device does not receive the RRC connection reconfiguration message carrying the relaxed measurement parameter, the low mobility evaluation and/or the stationary evaluation is not enabled.

In step 304, in the case where the terminal device is in the RRC connected state, the RRC connection reconfiguration message is sent to the terminal device, wherein the RRC connection reconfiguration message is used to trigger the terminal device to set the criterion value as the current measurement value.

For example, if the source access network device needs to enable the low mobility evaluation and/or stationary evaluation of the terminal device, the RRC connection reconfiguration message is sent to the terminal device, and the RRC connection reconfiguration message carries the relaxed measurement parameters. After receiving the RRC connection reconfiguration message, the terminal sets the criterion value to the current measurement value.

The base station carries the relaxed measurement parameter of RRM/RLM/BFD relaxed measurement in the RRC connection reconfiguration message. If the terminal device receives the RRC connection reconfiguration message, it will set the criterion value as the current measurement value for low mobility evaluation when switching to the target base station/target cell, or when accessing a new Pscell. At this point, the handover or access to the new Pscell is successful. For the terminal, it can determine whether the random access process of media access control (MAC) is completed. Pcell switch is the target cell switch/ the target access network device switch; the Pscell switch is SN change. If the terminal does not receive the RRC connection reconfiguration message, or fails to switch or access to a new Pscell, it is not necessary to start the low mobility evaluation.

As an embodiment, the terminal decides that the switching of the master node is successful, that is, the MAC node of MCG successfully completes the random access process to the target cell or base station. At this time, the spCellConfig of MCG in the RRC reconfiguration message carries the reconfiguration with sync, and the terminal will initiate the random access process after receiving the reconfiguration with sync indication. After MAC of an MCG successfully completes a random access procedure after applying an reconfigurationWithsync in spCellConfig of an MCG, the terminal sets the criterion value as the current measurement value.

That is, When the terminal device receives the RRC connection reconfiguration message and switches from the source access network device to the target access network device, it sets the criterion value as the current measurement value; Or, when the terminal device receives the RRC connection reconfiguration message and switches to the target primary cell, it sets the criterion value to the current measurement value; Or, when the terminal device receives the RRC connection reconfiguration message and switches to the first target primary secondary cell, it sets the criterion value to the current measurement value; Or, when the terminal device receives the RRC connection reconfiguration message and accesses the second target primary secondary cells, it sets the criterion value to the current measurement value.

Alternatively, setting the criterion value as the current measurement value in case of receiving the RRC connection reconfiguration message and accessing the second target primary secondary cell includes: setting the criterion value as the current measurement value in case of receiving the RRC connection reconfiguration message and modifying the second target primary secondary cell.

As an embodiment, the terminal decides that the handover to the first target primary secondary cell is successful, that is, the MAC node of SCG successfully completes the random access process to the target cell or base station. At this time, the spCellConfig of SCG in the RRC reconfiguration message carries the reconfiguration with sync, and the terminal will initiate the random access process after receiving the reconfiguration with sync indication. After MAC of an SCG successfully completes a random access procedure after applying an reconfigurationWithsync in spCellConfig of an SCG, the terminal sets the criterion value as the current measurement value.

In summary, in the method provided in this embodiment, the terminal device can report the capability information of whether it supports relaxed measurement to the source access network device, and the source access network device can forward the capability information to other access network device for configuration reference. The source access network device can carry the measurement evaluation parameters in the RRC connection reconfiguration message. When the terminal equipment receives the RRC connection reconfiguration message and completes the cell handover, it sets the criterion value as the current measurement value; when the terminal device does not receive the RRC connection reconfiguration message, the low mobility evaluation and stationary evaluation will not be enabled.

It should be noted that in the above embodiments, the low mobility evaluation and the stationary evaluation are divided into two embodiments to be described. However, those skilled in the art can combine the above two embodiments to achieve a new embodiment that simultaneously supports the low mobility evaluation and/or the stationary evaluation, which will not be described in detail.

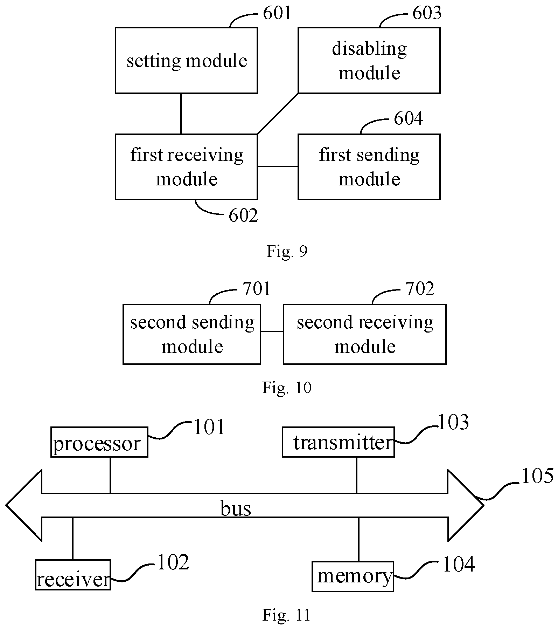

Fig. 9 shows a block diagram of a relaxed measurement apparatus provided in an exemplary embodiment of the present disclosure. The apparatus may be implemented as a terminal device, or as a part of the terminal device. The apparatus includes a setting module 601.

The setting module 601 is configured to set a criterion value as a current measurement value in case of being in a radio resource control (RRC) connected state, wherein the criterion value is used for low mobility evaluation and/or stationary evaluation, and the current measurement value includes a measured signal strength of a reference signal.

In an alternative embodiment, the apparatus further includes a first receiving module 602.

The first receiving module 602 is configured to receive an RRC dedicated signaling message.

The setting module 601 is configured to set the criterion value as the current measurement value in case of receiving the RRC dedicated signaling message.

In an alternative embodiment, the RRC dedicated signaling message includes a first evaluation parameter for the low mobility evaluation;

the first evaluation parameter includes at least one of a first predetermined threshold S_{SearchDeltaP} and a first duration T_{SearchDeltaP}.

In an alternative embodiment, the RRC dedicated signaling message includes a second evaluation parameter for the stationary evaluation,

the second evaluation parameter includes at least one of a second predetermined threshold S_{SearchDeltaP}' and a second duration T_{SearchDeltaP}'.

In an alternative embodiment, the RRC dedicated signaling message includes other configurations, and the other configurations are used for notifying the terminal device to perform UE assistance information (UAI) reporting for low mobility evaluation and/or stationary evaluation.

In an alternative embodiment, the RRC dedicated signaling message includes an RRC connection reconfiguration message.

In an alternative embodiment, the RRC connection reconfiguration message indicates that the low mobility evaluation is used for at least one of radio resource management (RRM) relaxed measurement evaluation, radio link monitoring (RLM) relaxed measurement evaluation, and bidirectional forwarding detection (BFD) relaxed measurement evaluation; and/or
the RRC connection reconfiguration message indicates that the stationary evaluation is used for at least one of RRM relaxed measurement evaluation, RLM relaxed measurement evaluation and BFD relaxed measurement evaluation.

In an alternative embodiment, the RRC connection reconfiguration message includes a switching indication, and the switching indication is used to indicate the terminal device to switch from a source access network device to a target access network device;
or, the RRC connection reconfiguration message does not include the switching indication.

In an alternative embodiment, the RRC connection reconfiguration message includes a secondary node add indication, and the secondary node add indication is used to indicate the terminal device to add a secondary node;
or, the RRC connection reconfiguration message includes a secondary node modification indication, and the secondary node modification indication is used to indicate the terminal device to modify a secondary node;
or, the RRC connection reconfiguration message includes a secondary node change indication, and the secondary node change indication is used to indicate the terminal device to change a secondary node.

In an alternative embodiment, the RRC dedicated signaling message includes an RRC connection recovery message.

In an alternative embodiment, the RRC connection recovery message indicates that the low mobility evaluation is used for at least one of radio resource management (RRM) relaxed measurement evaluation, radio link monitoring (RLM) relaxed measurement evaluation, and bidirectional forwarding detection (BFD) relaxed measurement evaluation; and/or
the RRC connection recovery message indicates that the stationary evaluation is used for at least one of RRM relaxed measurement evaluation, RLM relaxed measurement evaluation, and BFD relaxed measurement evaluation.

In an alternative embodiment, the apparatus further includes a first sending module 604.

The first sending module 604 is configured to send capability information to a source access network device, wherein the capability information is used to indicate that the terminal device supports at least one of radio resource management (RRM) relaxed measurement, radio link monitoring (RLM) relaxed measurement, and bidirectional forwarding detection (BFD) relaxed measurement.

In an alternative embodiment, the apparatus further include a first receiving module 602.

The first receiving module 602 is configured to receive the RRC connection reconfiguration message;
the setting module 601 is configured to set the criterion value as the current measurement value in case of receiving the RRC connection reconfiguration message and switching from a source access network device to a target access network device;
or, the first receiving module 602 is configured to receive the RRC connection reconfiguration message;
the setting module 601 is configured to set the criterion value as the current measurement value in case of receiving the RRC connection reconfiguration message and switching to a target primary cell;
or, the first receiving module 602 is configured to receive the RRC connection reconfiguration message;
the setting module 601 is configured to set the criterion value as the current measurement value in case of receiving the RRC connection reconfiguration message and switching to a first target primary secondary cell;
or, the first receiving module 602 is configured to receive the RRC connection reconfiguration message;
the setting module 601 is configured to set the criterion value as the current measurement value in case of receiving the RRC connection reconfiguration message and accessing to a second target primary secondary cell. Alternatively, the setting module 601 is configured to set the criterion value as the current measurement value in case of receiving the RRC connection reconfiguration message and modifying the second target primary secondary cell.

In an alternative embodiment, the apparatus further includes a disabling module 603.

The disabling module 603 is configured to disable the low mobility evaluation and/or the stationary evaluation in case of not receiving the RRC connection reconfiguration message.

In an alternative embodiment, the signal strength comprises at least one of a reference signal received power (RSRP), a reference signal received quality (RSRP), and a signal to interference plus noise ratio (SINR).

Fig. 10 shows a block diagram of a relaxed measurement apparatus provided in an exemplary embodiment of the present disclosure. The apparatus may be implemented as a network device, or as a part of the network device. The apparatus includes a second sending module 701.

The second sending module 701 is configured to send a radio resource control (RRC) dedicated signaling message to a terminal device in case that the terminal device is in an RRC connected state, wherein the RRC dedicated signaling message is used to trigger the terminal device to set a criterion value as a current measurement value, the criterion value is used for low mobility evaluation and/or stationary evaluation, and the current measurement value includes a measured signal strength of a reference signal.

In an alternative embodiment, the RRC dedicated signaling message includes a first evaluation parameter for the low mobility evaluation; the first evaluation parameter includes at least one of a first predetermined threshold S_{SearchDeltaP} and a first duration T_{SearchDeltaP}.

In an alternative embodiment, the RRC dedicated signaling message includes a second evaluation parameter for the stationary evaluation; the second evaluation parameter includes at least one of a second predetermined threshold S_{SearchDeitaP}'and a second duration T_{SearchDeltaP}'.

In an alternative embodiment, the RRC dedicated signaling message includes other configurations, and the other configurations are used for notifying the terminal device to perform UE assistance information (UAI) reporting for low mobility evaluation and/or stationary evaluation.

In an alternative embodiment, the RRC dedicated signaling message includes an RRC connection reconfiguration message.

In an alternative embodiment, the RRC connection reconfiguration message indicates that the low mobility evaluation is used for at least one of radio resource management (RRM) relaxed measurement evaluation, radio link monitoring (RLM) relaxed measurement evaluation, and bidirectional forwarding detection (BFD) relaxed measurement evaluation; and/or
the RRC connection reconfiguration message indicates that the stationary evaluation is used for at least one of RRM relaxed measurement evaluation, RLM relaxed measurement evaluation and BFD relaxed measurement evaluation.

In an alternative embodiment, the RRC connection reconfiguration message includes a switching indication, and the switching indication is used to indicate the terminal device to switch from a source access network device to a target access network device;
or, the RRC connection reconfiguration message does not include the switching indication.

In an alternative embodiment, the RRC connection reconfiguration message includes a secondary node add indication, and the secondary node add indication is used to indicate the terminal device to add a secondary node;
or, the RRC connection reconfiguration message includes a secondary node modification indication, and the secondary node modification indication is used to indicate the terminal device to modify a secondary node;
or, the RRC connection reconfiguration message includes a secondary node change indication, and the secondary node change indication is used to indicate the terminal device to change a secondary node.

In an alternative embodiment, the RRC dedicated signaling message includes an RRC connection recovery message.

In an alternative embodiment, the RRC connection recovery message indicates that the low mobility evaluation is used for at least one of radio resource management (RRM) relaxed measurement evaluation, radio link monitoring (RLM) relaxed measurement evaluation, and bidirectional forwarding detection (BFD) relaxed measurement evaluation; and/or
the RRC connection recovery message indicates that the stationary evaluation is used for at least one of RRM relaxed measurement evaluation, RLM relaxed measurement evaluation, and BFD relaxed measurement evaluation.

In an alternative embodiment, the apparatus further includes a second receiving module 702.

The second receiving module 702 is configured to receive capability information sent by the terminal device, wherein the capability information is used to indicate that the terminal device supports at least one of radio resource management (RRM) relaxed measurement, radio link monitoring (RLM) relaxed measurement, and bidirectional forwarding detection (BFD) relaxed measurement.

In an alternative embodiment, the second sending module 701 is configured to forward the capability information to a target access network device.

In an alternative embodiment, the second sending module 701 is configured to send a switching request to the target access network device, wherein the switching request comprises the capability information, and the switching request is used to request the terminal device to switch from the source access network device to the target access network device.

In an alternative embodiment, the switching request further includes a relaxed measurement parameter, the relaxed measurement parameter is configured by the source access network device for the terminal device, and the relaxed measurement parameter includes a parameter for at least one of radio resource management (RRM) relaxed measurement, radio link monitoring (RLM) relaxed measurement, and bidirectional forwarding detection (BFD) relaxed measurement.

In an alternative embodiment, the second sending module 701 is configured to send a secondary node add request to the target access network device, wherein the second node add request includes the capability information, and the secondary node add request is used to request to add a secondary node for the terminal device;
or, the second sending module 701 is configured to send a secondary node modification request to the target access network device, wherein the secondary node modification request includes the capability information, and the secondary node modification request is used to request to modify a secondary node for the terminal device;
or, the second sending module 701 is configured to send a secondary node change request to the target access network device, wherein the secondary node change request includes the capability information, and the secondary node change request is used to request to change a secondary node for the terminal device.

In an alternative embodiment, the secondary node add request further includes a relaxed measurement parameter, or the secondary node modification request further includes the relaxed measurement parameter, or the secondary node change request further includes the relaxed measurement parameter;
the relaxed measurement parameter is configured by the source access network device for the terminal device, and the relaxed measurement parameter includes a parameter for at least one of radio resource management (RRM) relaxed measurement, radio link monitoring (RLM) relaxed measurement, and bidirectional forwarding detection (BFD) relaxed measurement.

In an alternative embodiment, the relaxed measurement parameter includes at least one of a first evaluation parameter for the low mobility evaluation, a second evaluation parameter for the stationary evaluation, a first enable or disable indication, and a second enable or disable indication, the first enable or disable indication is used to indicate enabling or disabling the low mobility evaluation, and the second enable or disable indication is used to indicate enabling or disabling the stationary evaluation.

In an alternative embodiment, the RRC connection reconfiguration message is used to trigger the terminal device to set the criterion value as the current measurement value in case that the terminal device switches from the source access network device to a target access network device;
or, the RRC connection reconfiguration message is used to trigger the terminal device to set the criterion value as the current measurement value in case that the terminal device switches to a target primary cell;
or, the RRC connection reconfiguration message is used to trigger the terminal device to set the criterion value as the current measurement value in case that the terminal device switches to a first target primary secondary cell;
or, the RRC connection reconfiguration message is used to trigger the terminal device to set the criterion value as the current measurement value in case that the terminal device switches to a second target primary secondary cell.

In an alternative embodiment, the second sending module is configured to not send the RRC connection reconfiguration message in case of disabling the low mobility evaluation and/or the stationary evaluation of the terminal device.

In an alternative embodiment, the signal strength includes at least one of a reference signal received power (RSRP), a reference signal received quality (RSRP), and a signal to interference plus noise ratio (SINR).

Fig. 11 shows a schematic block diagram of a communication device (terminal device or network device) provided in an exemplary embodiment of the present disclosure. The communication device includes a processor 101, a receiver 102, a transmitter 103, a memory 104, and a bus 105.

The processor 101 includes one or more processing cores. The processor 101 executes various functional applications and information processing by running software programs and modules.

The receiver 102 and the transmitter 103 may be implemented as a communication component, which may be a communication chip.

The memory 104 is connected with the processor 101 through the bus 105.

The memory 104 can be used to store at least one instruction, and the processor 101 is used to execute the at least one instruction to realize the steps in the above method embodiments.

In addition, the memory 104 may be implemented by any type of volatile or non-volatile storage device or a combination thereof. Volatile or non-volatile storage devices include but are not limited to: magnetic disk or optical disk, electrically erasable programmable read only memory (EEPROM), erasable programmable read only memory (EPROM), static random access memory (SRAM), read only memory (ROM), magnetic memory, flash memory, programmable read only memory (PROM).

When the communication device is implemented as the terminal device, the processor and transceiver in the communication device according to the embodiment of the present disclosure can perform the steps performed by the terminal device in any of the methods shown in Fig. 4-7 above, which will not be repeated here.

In a possible implementation, when the communication device is implemented as the terminal device,
the processor is configured to set a criterion value as a current measurement value in case of being in a radio resource control (RRC) connected state, wherein the criterion value is used for low mobility evaluation and/or stationary evaluation, and the current measurement value includes a measured signal strength of a reference signal.

When the communication device is implemented as the network device, the processor and transceiver in the communication device according to the embodiment of the present disclosure can perform the steps performed by the network device (source access network device) in any of the methods shown in Fig. 4-7 above, which will not be repeated here.

In a possible implementation, when the communication device is implemented as the network device,
the transceiver is configured to send a radio resource control (RRC) dedicated signaling message to a terminal device in case that the terminal device is in an RRC connected state, wherein the RRC dedicated signaling message is used to trigger the terminal device to set a criterion value as a current measurement value, the criterion value is used for low mobility evaluation and/or stationary evaluation, and the current measurement value includes a measured signal strength of a reference signal.

In an exemplary embodiment, a computer readable storage medium is provided. At least one instruction, at least one program, code set or instruction set is stored in the computer readable storage medium, and the at least one instruction, at least one program, code set or instruction set is loaded and executed by the processor to implement the relaxed measurement method performed by the communication device provided by the above method embodiments.

In an exemplary embodiment, there is also provided a chip, which includes a programmable logic circuit and/or program instructions for implementing the relaxed measurement method described in the above aspect when the chip is running on a computer device.

In an exemplary embodiment, there is also provided a computer program product that, when running on a processor of a computer device, causes the computer device to perform the relaxed measurement method described in the above aspect.

Those skilled in the art can understand that all or part of the steps to implement the above embodiments can be completed by hardware, or the related hardware can be instructed to complete through a program. The program can be stored in a computer-readable storage medium, and the storage medium mentioned above can be read-only memory, magnetic disk, optical disc, etc.

The above are only optional embodiments of this application and is not intended to limit this application. Any modification, equivalent replacement, improvement, etc. made within the spirit and principles of this application should be included in the scope of protection of this application.

## Claims

1. A relaxed measurement method, performed by a terminal device, comprising:
in case of being in a radio resource control (RRC) connected state, setting a criterion value as a current measurement value, wherein the criterion value is used for low mobility evaluation and/or stationary evaluation, and the current measurement value comprises a measured signal strength of a reference signal.

2. The method of claim 1, wherein setting the criterion value as the current measurement value comprises:
setting the criterion value as the current measurement value in a case of receiving an RRC dedicated signaling message.

3. The method of claim 2, wherein the RRC dedicated signaling message comprises a first evaluation parameter for the low mobility evaluation;
the first evaluation parameter comprises at least one of a first predetermined threshold S_{SearchDeltaP} and a first duration T_{SearchDeltaP}.

4. The method of claim 2, wherein the RRC dedicated signaling message comprises a second evaluation parameter for the stationary evaluation,
the second evaluation parameter comprises at least one of a second predetermined threshold S_{SearchDeltaP}'and a second duration T_{SearchDeltaP}'.

5. The method of claim 2, wherein the RRC dedicated signaling message comprises other configurations, and the other configurations are used for notifying the terminal device to perform UE assistance information (UAI) reporting for low mobility evaluation and/or stationary evaluation.

6. The method of any of claims 2-5, wherein the RRC dedicated signaling message comprises an RRC connection reconfiguration message.

7. The method of claim 6, wherein the RRC connection reconfiguration message indicates that the low mobility evaluation is used for at least one of radio resource management (RRM) relaxed measurement evaluation, radio link monitoring (RLM) relaxed measurement evaluation, and bidirectional forwarding detection (BFD) relaxed measurement evaluation; and/or
the RRC connection reconfiguration message indicates that the stationary evaluation is used for at least one of RRM relaxed measurement evaluation, RLM relaxed measurement evaluation and BFD relaxed measurement evaluation.

8. The method of claim 6, wherein the RRC connection reconfiguration message comprises a switching indication, and the switching indication is used to indicate the terminal device to switch from a source access network device to a target access network device;
or, the RRC connection reconfiguration message does not comprise the switching indication.

9. The method of claim 6, wherein the RRC connection reconfiguration message comprises a secondary node add indication, and the secondary node add indication is used to indicate the terminal device to add a secondary node;
or, the RRC connection reconfiguration message comprises a secondary node modification indication, and the secondary node modification indication is used to indicate the terminal device to modify a secondary node;
or, the RRC connection reconfiguration message comprises a secondary node change indication, and the secondary node change indication is used to indicate the terminal device to change a secondary node.

10. The method of any of claims 2-5, wherein the RRC dedicated signaling message comprises an RRC connection recovery message.

11. The method of claim 10, wherein the RRC connection recovery message indicates that the low mobility evaluation is used for at least one of radio resource management (RRM) relaxed measurement evaluation, radio link monitoring (RLM) relaxed measurement evaluation, and bidirectional forwarding detection (BFD) relaxed measurement evaluation; and/or
the RRC connection recovery message indicates that the stationary evaluation is used for at least one of RRM relaxed measurement evaluation, RLM relaxed measurement evaluation, and BFD relaxed measurement evaluation.

12. The method of any of claims 1-11, further comprising:
sending capability information to a source access network device, wherein the capability information is used to indicate that the terminal device supports at least one of radio resource management (RRM) relaxed measurement, radio link monitoring (RLM) relaxed measurement, and bidirectional forwarding detection (BFD) relaxed measurement.

13. The method of claim 6, wherein setting the criterion value as the current measurement value in case of receiving the RRC dedicated signaling message comprises:
setting the criterion value as the current measurement value in case of receiving the RRC connection reconfiguration message and switching from a source access network device to a target access network device;
or, setting the criterion value as the current measurement value in case of receiving the RRC connection reconfiguration message and switching to a target primary cell;
or, setting the criterion value as the current measurement value in case of receiving the RRC connection reconfiguration message and switching to a first target primary secondary cell;
or, setting the criterion value as the current measurement value in case of receiving the RRC connection reconfiguration message and accessing to a second target primary secondary cell.

14. The method of claim 6, further comprising:
disabling the low mobility evaluation and/or stationary evaluation in case of not receiving the RRC connection reconfiguration message.

15. The method of any of claims 1-14, wherein the signal strength comprises at least one of a reference signal received power (RSRP), a reference signal received quality (RSRP), and a signal to interference plus noise ratio (SINR).

16. A relaxed measurement method, performed by a source access network device, comprising:
in case that a terminal device is in a radio resource control (RRC) connected state, sending an RRC dedicated signaling message to the terminal device, wherein the RRC dedicated signaling message is used to trigger the terminal device to set a criterion value as a current measurement value, the criterion value is used for low mobility evaluation and/or stationary evaluation, and the current measurement value comprises a measured signal strength of a reference signal.

17. The method of claim 16, wherein the RRC dedicated signaling message comprises a first evaluation parameter for the low mobility evaluation;
the first evaluation parameter comprises at least one of a first predetermined threshold S_{SearchDeltaP} and a first duration T_{SearchDeltaP}.

18. The method of claim 16, wherein the RRC dedicated signaling message comprises a second evaluation parameter for the stationary evaluation,
the second evaluation parameter comprises at least one of a second predetermined threshold S_{SearchDeltaP}'and a second duration T_{SearchDeltaP}'_{.}

19. The method of claim 16, wherein the RRC dedicated signaling message comprises other configurations, and the other configurations are used for notifying the terminal device to perform UE assistance information (UAI) reporting for low mobility evaluation and/or stationary evaluation.

20. The method of any of claims 16-19, wherein the RRC dedicated signaling message comprises an RRC connection reconfiguration message.

21. The method of claim 20, wherein the RRC connection reconfiguration message indicates that the low mobility evaluation is used for at least one of radio resource management (RRM) relaxed measurement evaluation, radio link monitoring (RLM) relaxed measurement evaluation, and bidirectional forwarding detection (BFD) relaxed measurement evaluation; and/or
the RRC connection reconfiguration message indicates that the stationary evaluation is used for at least one of RRM relaxed measurement evaluation, RLM relaxed measurement evaluation and BFD relaxed measurement evaluation.

22. The method of claim 20, wherein the RRC connection reconfiguration message comprises a switching indication, and the switching indication is used to indicate the terminal device to switch from a source access network device to a target access network device;
or, the RRC connection reconfiguration message does not comprise the switching indication.

23. The method of claim 20, wherein the RRC connection reconfiguration message comprises a secondary node add indication, and the secondary node add indication is used to indicate the terminal device to add a secondary node;
or, the RRC connection reconfiguration message comprises a secondary node modification indication, and the secondary node modification indication is used to indicate the terminal device to modify a secondary node;
or, the RRC connection reconfiguration message comprises a secondary node change indication, and the secondary node change indication is used to indicate the terminal device to change a secondary node.

24. The method of any of claims 16-19, wherein the RRC dedicated signaling message comprises an RRC connection recovery message.

25. The method of claim 24, wherein the RRC connection recovery message indicates that the low mobility evaluation is used for at least one of radio resource management (RRM) relaxed measurement evaluation, radio link monitoring (RLM) relaxed measurement evaluation, and bidirectional forwarding detection (BFD) relaxed measurement evaluation; and/or
the RRC connection recovery message indicates that the stationary evaluation is used for at least one of RRM relaxed measurement evaluation, RLM relaxed measurement evaluation, and BFD relaxed measurement evaluation.

26. The method of any of claims 16-25, further comprising:
receiving capability information sent by the terminal device, wherein the capability information is used to indicate that the terminal device supports at least one of radio resource management (RRM) relaxed measurement, radio link monitoring (RLM) relaxed measurement, and bidirectional forwarding detection (BFD) relaxed measurement.

27. The method of claim 26, further comprising:
forwarding the capability information to a target access network device.

28. The method of claim 27, wherein forwarding the capability information to the target access network device comprises:
sending a switching request to the target access network device, wherein the switching request comprises the capability information, and the switching request is used to request the terminal device to switch from the source access network device to the target access network device.

29. The method of claim 28, wherein the switching request further comprises a relaxed measurement parameter, the relaxed measurement parameter is configured by the source access network device for the terminal device, and the relaxed measurement parameter comprises a parameter for at least one of radio resource management (RRM) relaxed measurement, radio link monitoring (RLM) relaxed measurement, and bidirectional forwarding detection (BFD) relaxed measurement.

30. The method of claim 27, wherein forwarding the capability information to the target access network device comprises:
sending a secondary node add request to the target access network device, wherein the second node add request comprises the capability information, and the secondary node add request is used to request to add a secondary node for the terminal device;
or, sending a secondary node modification request to the target access network device, wherein the secondary node modification request comprises the capability information, and the secondary node modification request is used to request to modify a secondary node for the terminal device;
or, sending a secondary node change request to the target access network device, wherein the secondary node change request comprises the capability information, and the secondary node change request is used to request to change a secondary node for the terminal device.

31. The method of claim 30, wherein the secondary node add request further comprises a relaxed measurement parameter, or the secondary node modification request further comprises the relaxed measurement parameter, or the secondary node change request further comprises the relaxed measurement parameter;
the relaxed measurement parameter is configured by the source access network device for the terminal device, and the relaxed measurement parameter comprises a parameter for at least one of radio resource management (RRM) relaxed measurement, radio link monitoring (RLM) relaxed measurement, and bidirectional forwarding detection (BFD) relaxed measurement.

32. The method of claim 29 or 31, wherein the relaxed measurement parameter comprises at least one of a first evaluation parameter for the low mobility evaluation, a second evaluation parameter for the stationary evaluation, a first enable or disable indication, and a second enable or disable indication, the first enable or disable indication is used to indicate enabling or disabling the low mobility evaluation, and the second enable or disable indication is used to indicate enabling or disabling the stationary evaluation.

33. The method of claim 20, wherein the RRC connection reconfiguration message is used to trigger the terminal device to set the criterion value as the current measurement value in case that the terminal device switches from the source access network device to a target access network device;
or, the RRC connection reconfiguration message is used to trigger the terminal device to set the criterion value as the current measurement value in case that the terminal device switches to a target primary cell;
or, the RRC connection reconfiguration message is used to trigger the terminal device to set the criterion value as the current measurement value in case that the terminal device switches to a first target primary secondary cell;
or, the RRC connection reconfiguration message is used to trigger the terminal device to set the criterion value as the current measurement value in case that the terminal device switches to a second target primary secondary cell.

34. The method of claim 20, further comprising:
not sending the RRC connection reconfiguration message in case of disabling the low mobility evaluation and/or the stationary evaluation of the terminal device.

35. The method of any of claims 16-34, wherein the signal strength comprises at least one of a reference signal received power (RSRP), a reference signal received quality (RSRP), and a signal to interference plus noise ratio (SINR).

36. A relaxed measurement apparatus, comprising:
a setting module, configured to set a criterion value as a current measurement value in case of being in a radio resource control (RRC) connected state, wherein the criterion value is used for low mobility evaluation and/or stationary evaluation, and the current measurement value comprises a measured signal strength of a reference signal.

37. The apparatus of claim 36, wherein the setting module is configured to set the criterion value as the current measurement value in case of receiving an RRC dedicated signaling message.

38. The apparatus of claim 37, wherein the RRC dedicated signaling message comprises a first evaluation parameter for the low mobility evaluation;
the first evaluation parameter comprises at least one of a first predetermined threshold S_{SearchDeltaP} and a first duration T_{SearchDeltaP}.

39. The apparatus of claim 37, wherein the RRC dedicated signaling message comprises a second evaluation parameter for the stationary evaluation,
the second evaluation parameter comprises at least one of a second predetermined threshold S_{SearchDeltaP}'and a second duration T_{SearchDeltaP}'.

40. The apparatus of claim 37, wherein the RRC dedicated signaling message comprises other configurations, and the other configurations are used for notifying the terminal device to perform UE assistance information (UAI) reporting for low mobility evaluation and/or stationary evaluation.

41. The apparatus of any of claims 37-40, wherein the RRC dedicated signaling message comprises an RRC connection reconfiguration message.

42. The apparatus of claim 41, wherein the RRC connection reconfiguration message indicates that the low mobility evaluation is used for at least one of radio resource management (RRM) relaxed measurement evaluation, radio link monitoring (RLM) relaxed measurement evaluation, and bidirectional forwarding detection (BFD) relaxed measurement evaluation; and/or
the RRC connection reconfiguration message indicates that the stationary evaluation is used for at least one of RRM relaxed measurement evaluation, RLM relaxed measurement evaluation and BFD relaxed measurement evaluation.

43. The apparatus of claim 41, wherein the RRC connection reconfiguration message comprises a switching indication, and the switching indication is used to indicate the terminal device to switch from a source access network device to a target access network device;
or, the RRC connection reconfiguration message does not comprise the switching indication.

44. The apparatus of claim 41, wherein the RRC connection reconfiguration message comprises a secondary node add indication, and the secondary node add indication is used to indicate the terminal device to add a secondary node;
or, the RRC connection reconfiguration message comprises a secondary node modification indication, and the secondary node modification indication is used to indicate the terminal device to modify a secondary node;
or, the RRC connection reconfiguration message comprises a secondary node change indication, and the secondary node change indication is used to indicate the terminal device to change a secondary node.

45. The apparatus of any of claims 37-40, wherein the RRC dedicated signaling message comprises an RRC connection recovery message.

46. The apparatus of claim 45, wherein the RRC connection recovery message indicates that the low mobility evaluation is used for at least one of radio resource management (RRM) relaxed measurement evaluation, radio link monitoring (RLM) relaxed measurement evaluation, and bidirectional forwarding detection (BFD) relaxed measurement evaluation; and/or
the RRC connection recovery message indicates that the stationary evaluation is used for at least one of RRM relaxed measurement evaluation, RLM relaxed measurement evaluation, and BFD relaxed measurement evaluation.

47. The apparatus of any of claims 36-46, further comprising:
a first sending module, configured to send capability information to a source access network device, wherein the capability information is used to indicate that the terminal device supports at least one of radio resource management (RRM) relaxed measurement, radio link monitoring (RLM) relaxed measurement, and bidirectional forwarding detection (BFD) relaxed measurement.

48. The apparatus of claim 41, wherein
the setting module is configured to set the criterion value as the current measurement value in case of receiving the RRC connection reconfiguration message and switching from a source access network device to a target access network device;
or, the setting module is configured to set the criterion value as the current measurement value in case of receiving the RRC connection reconfiguration message and switching to a target primary cell;
or, the setting module is configured to set the criterion value as the current measurement value in case of receiving the RRC connection reconfiguration message and switching to a first target primary secondary cell;
or, the setting module is configured to set the criterion value as the current measurement value in case of receiving the RRC connection reconfiguration message and accessing to a second target primary secondary cell.

49. The apparatus of claim 41, further comprising:
a disabling module, configured to disable the low mobility evaluation and/or the stationary evaluation in case of not receiving the RRC connection reconfiguration message.

50. The apparatus of any of claims 36-49, wherein the signal strength comprises at least one of a reference signal received power (RSRP), a reference signal received quality (RSRP), and a signal to interference plus noise ratio (SINR).

51. A relaxed measurement apparatus, comprising:
a second sending module, configured to send a radio resource control (RRC) dedicated signaling message to a terminal device in case that the terminal device is in an RRC connected state, wherein the RRC dedicated signaling message is used to trigger the terminal device to set a criterion value as a current measurement value, the criterion value is used for low mobility evaluation and/or stationary evaluation, and the current measurement value comprises a measured signal strength of a reference signal.

52. The apparatus of claim 51, wherein the RRC dedicated signaling message comprises a first evaluation parameter for the low mobility evaluation;
the first evaluation parameter comprises at least one of a first predetermined threshold S_{SearchDeltaP} and a first duration T_{SearchDeltaP}.

53. The apparatus of claim 51, wherein the RRC dedicated signaling message comprises a second evaluation parameter for the stationary evaluation,
the second evaluation parameter comprises at least one of a second predetermined threshold S_{SearchDeltaP}'and a second duration T_{SearchDeltaP}'.

54. The apparatus of claim 51, wherein the RRC dedicated signaling message comprises other configurations, and the other configurations are used for notifying the terminal device to perform UE assistance information (UAI) reporting for low mobility evaluation and/or stationary evaluation.

55. The apparatus of any of claims 51-54, wherein the RRC dedicated signaling message comprises an RRC connection reconfiguration message.

56. The apparatus of claim 55, wherein the RRC connection reconfiguration message indicates that the low mobility evaluation is used for at least one of radio resource management (RRM) relaxed measurement evaluation, radio link monitoring (RLM) relaxed measurement evaluation, and bidirectional forwarding detection (BFD) relaxed measurement evaluation; and/or
the RRC connection reconfiguration message indicates that the stationary evaluation is used for at least one of RRM relaxed measurement evaluation, RLM relaxed measurement evaluation and BFD relaxed measurement evaluation.

57. The apparatus of claim 55, wherein the RRC connection reconfiguration message comprises a switching indication, and the switching indication is used to indicate the terminal device to switch from a source access network device to a target access network device;
or, the RRC connection reconfiguration message does not comprise the switching indication.

58. The apparatus of claim 55, wherein the RRC connection reconfiguration message comprises a secondary node add indication, and the secondary node add indication is used to indicate the terminal device to add a secondary node;
or, the RRC connection reconfiguration message comprises a secondary node modification indication, and the secondary node modification indication is used to indicate the terminal device to modify a secondary node;
or, the RRC connection reconfiguration message comprises a secondary node change indication, and the secondary node change indication is used to indicate the terminal device to change a secondary node.

59. The apparatus of any of claims 51-54, wherein the RRC dedicated signaling message comprises an RRC connection recovery message.

60. The apparatus of claim 59, wherein the RRC connection recovery message indicates that the low mobility evaluation is used for at least one of radio resource management (RRM) relaxed measurement evaluation, radio link monitoring (RLM) relaxed measurement evaluation, and bidirectional forwarding detection (BFD) relaxed measurement evaluation; and/or
the RRC connection recovery message indicates that the stationary evaluation is used for at least one of RRM relaxed measurement evaluation, RLM relaxed measurement evaluation, and BFD relaxed measurement evaluation.

61. The apparatus of any of claims 51-60, further comprising:
a second receiving module, configured to receive capability information sent by the terminal device, wherein the capability information is used to indicate that the terminal device supports at least one of radio resource management (RRM) relaxed measurement, radio link monitoring (RLM) relaxed measurement, and bidirectional forwarding detection (BFD) relaxed measurement.

62. The apparatus of claim 61, wherein the second sending module is configured to forward the capability information to a target access network device.

63. The apparatus of claim 62, wherein the second sending module is configured to send a switching request to the target access network device, wherein the switching request comprises the capability information, and the switching request is used to request the terminal device to switch from the source access network device to the target access network device.

64. The apparatus of claim 63, wherein the switching request further comprises a relaxed measurement parameter, the relaxed measurement parameter is configured by the source access network device for the terminal device, and the relaxed measurement parameter comprises a parameter for at least one of radio resource management (RRM) relaxed measurement, radio link monitoring (RLM) relaxed measurement, and bidirectional forwarding detection (BFD) relaxed measurement.

65. The apparatus of claim 62, wherein the second sending module is configured to send a secondary node add request to the target access network device, wherein the second node add request comprises the capability information, and the secondary node add request is used to request to add a secondary node for the terminal device;
or, the second sending module is configured to send a secondary node modification request to the target access network device, wherein the secondary node modification request comprises the capability information, and the secondary node modification request is used to request to modify a secondary node for the terminal device;
or, the second sending module is configured to send a secondary node change request to the target access network device, wherein the secondary node change request comprises the capability information, and the secondary node change request is used to request to change a secondary node for the terminal device.

66. The apparatus of claim 65, wherein the secondary node add request further comprises a relaxed measurement parameter, or the secondary node modification request further comprises the relaxed measurement parameter, or the secondary node change request further comprises the relaxed measurement parameter;
the relaxed measurement parameter is configured by the source access network device for the terminal device, and the relaxed measurement parameter comprises a parameter for at least one of radio resource management (RRM) relaxed measurement, radio link monitoring (RLM) relaxed measurement, and bidirectional forwarding detection (BFD) relaxed measurement.

67. The apparatus of claim 64 or 66, wherein the relaxed measurement parameter comprises at least one of a first evaluation parameter for the low mobility evaluation, a second evaluation parameter for the stationary evaluation, a first enable or disable indication, and a second enable or disable indication, the first enable or disable indication is used to indicate enabling or disabling the low mobility evaluation, and the second enable or disable indication is used to indicate enabling or disabling the stationary evaluation.

68. The apparatus of claim 55, wherein the RRC connection reconfiguration message is used to trigger the terminal device to set the criterion value as the current measurement value in case that the terminal device switches from the source access network device to a target access network device;
or, the RRC connection reconfiguration message is used to trigger the terminal device to set the criterion value as the current measurement value in case that the terminal device switches to a target primary cell;
or, the RRC connection reconfiguration message is used to trigger the terminal device to set the criterion value as the current measurement value in case that the terminal device switches to a first target primary secondary cell;
or, the RRC connection reconfiguration message is used to trigger the terminal device to set the criterion value as the current measurement value in case that the terminal device switches to a second target primary secondary cell.

69. The apparatus of claim 55, wherein the second sending module is configured to not send the RRC connection reconfiguration message in case of disabling the low mobility evaluation and/or the stationary evaluation of the terminal device.

70. The apparatus of any of claims 51-69, wherein the signal strength comprises at least one of a reference signal received power (RSRP), a reference signal received quality (RSRP), and a signal to interference plus noise ratio (SINR).

71. A terminal device, comprising a processor, wherein
the processor is configured to set a criterion value as a current measurement value in case of being in a radio resource control (RRC) connected state, wherein the criterion value is used for low mobility evaluation and/or stationary evaluation, and the current measurement value comprises a measured signal strength of a reference signal.

72. A network device, comprising a transceiver, wherein
the transceiver is configured to send a radio resource control (RRC) dedicated signaling message to a terminal device in case that the terminal device is in an RRC connected state, wherein the RRC dedicated signaling message is used to trigger the terminal device to set a criterion value as a current measurement value, the criterion value is used for low mobility evaluation and/or stationary evaluation, and the current measurement value comprises a measured signal strength of a reference signal.

73. A computer readable storage medium, storing executable instructions, wherein the executable instructions are loaded and executed by a processor to implement the relaxed measurement method according to any one of claims 1 to 35.

74. A chip, comprising a programmable logic circuit or program, and configured to implement the relaxed measurement method according to any one of claims 1 to 35.

75. A computer program product or a computer program, comprising computer instructions, wherein the computer instructions are stored in a computer readable storage medium, a processor reads and executes the computer instructions from the computer readable storage medium, to implement the relaxed measurement method according to any one of claims 1 to 35.
